(19) Europäisches Patentamt
European Patent Office
Office européen des brevets

(11) **EP 4 723 061 A1**

(12) **EUROPEAN PATENT APPLICATION**
published in accordance with Art. 153(4) EPC

(43) Date of publication:
**08.04.2026 Bulletin 2026/15**

(21) Application number: **24835126.4**

(22) Date of filing: **09.05.2024**

(51) International Patent Classification (IPC):
*G06V 20/62* (2022.01)   *G06V 10/75* (2022.01)
*G06V 10/25* (2022.01)   *G08G 1/017* (2006.01)

(86) International application number:
**PCT/CN2024/091827**

(87) International publication number:
**WO 2025/007641 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.07.2023 CN 202310812852**

(71) Applicant: **Zhejiang Uniview Technologies Co.,
Ltd.
Hangzhou, Zhejiang 310051 (CN)**

(72) Inventors:
• **LI, Yuan
Hangzhou, Zhejiang 310051 (CN)**
• **CAI, Kai
Hangzhou, Zhejiang 310051 (CN)**

(74) Representative: **HGF
HGF Europe LLP
Neumarkter Straße 18
81673 München (DE)**

(54) **VEHICLE TRACKING METHOD AND SYSTEM, STORAGE MEDIUM AND SERVER**

(57)    Provided are a vehicle tracking method and system, a storage medium, and a server. The vehicle tracking method includes: recording vehicle feature information of a target vehicle when the target vehicle enters; performing multi-frame license plate recognition based on the vehicle feature information; if the target license plate number first satisfies a recognition threshold, taking the target license plate number as the final license plate number of the target vehicle, and adding the final license plate number as an entry license plate number of a parking region corresponding to the target vehicle; and when an exit vehicle in the parking region cannot be recognized, matching the exit vehicle by using the entry license plate number of the parking region to determine the vehicle information of the exit vehicle.

FIG. 1

EP 4 723 061 A1

**Description**

The present application claims priority to Chinese Patent Application No. 202310812852.X filed with the China National Intellectual Property Administration (CNIPA) on Jul. 4, 2023, the disclosure of which is incorporated herein by reference in its entirety.

TECHNICAL FIELD

The present application relates to the field of image detection, for example, a vehicle tracking method and system, a storage medium, and a server.

BACKGROUND

The vehicle entry and exit recognition algorithm may be used to automatically report the state of vehicle entry or exit, entry or exit time information, and related license plate information when a vehicle enters or exits the monitored parking region. In management scenarios such as self-service charging spaces, car washing spaces in 4S stores, and refueling spaces in gas stations, this algorithm facilitates vehicle management for each parking space. In the case of reducing manpower and financial resources, the warning for vehicle entry and exit, the monitoring and timing of vehicles in parking spaces, and the management and recording of vehicle information are implemented intelligently, thereby supporting subsequent vehicle tracking by the platforms of relevant staff.

However, it is unstable to use a vehicle target detected by the vehicle entry and exit recognition algorithm as the basis for judging vehicle entry and exit. For example, when a vehicle is obscured or has indistinct vehicle features, the vehicle target identifier (ID) is not unique, resulting in unstable tracking, failing to lock onto the vehicle target, and thereby making the accuracy of vehicle tracking and detection relatively low.

SUMMARY

The present application provides a vehicle tracking method and system, a storage medium, and a server to improve the precision of vehicle tracking and detection.

The present application provides a vehicle tracking method. The vehicle tracking method includes the following.

Vehicle feature information of a target vehicle is recorded in a case where the target vehicle enters a parking region; multi-frame license plate recognition is performed based on the vehicle feature information; in a case where a target license plate number first satisfies a recognition threshold, the target license plate number is taken as a final license plate number of the target vehicle, and the final license plate number is added as an entry license plate number of the parking region corresponding to the target vehicle; and in a case where an exit vehicle in the parking region cannot be recognized, the exit vehicle is matched by using the entry license plate number of the parking region to determine vehicle information of the exit vehicle.

The present application further provides a vehicle tracking system. The vehicle tracking system includes a vehicle detection module, an entry count detection module, a vehicle alarm module, and a vehicle matching module.

The vehicle detection module is configured to record vehicle feature information of a target vehicle in a case where the target vehicle enters a parking region. The entry count detection module is configured to perform multi-frame license plate recognition based on the vehicle feature information. The vehicle alarm module is configured to, in a case where a target license plate number first satisfies a recognition threshold, take the target license plate number as a final license plate number of the target vehicle and add the final license plate number as an entry license plate number of the parking region corresponding to the target vehicle. The vehicle matching module is configured to, in a case where an exit vehicle in the parking region cannot be recognized, match the exit vehicle by using the entry license plate number of the parking region to determine vehicle information of the exit vehicle.

The present application further provides a computer-readable storage medium for storing computer programs, where when the computer programs are executed by a processor, the preceding vehicle tracking method is performed.

The present application further provides a server. The server includes a processor and a memory. The memory stores computer programs. The processor, when calling the computer programs in the memory, performs the preceding vehicle tracking method.

BRIEF DESCRIPTION OF DRAWINGS

    FIG. 1 is a flowchart of a vehicle tracking method according to an embodiment of this application.

    FIG. 2 is a structural diagram of a vehicle tracking system according to an embodiment of the present application.

    FIG. 3 is a structural diagram of a server according to an embodiment of the present application.

DETAILED DESCRIPTION

Technical solutions in embodiments of the present application are described in conjunction with the drawings in the embodiments of the present application. The embodiments described herein are part of the embodiments of the present application.

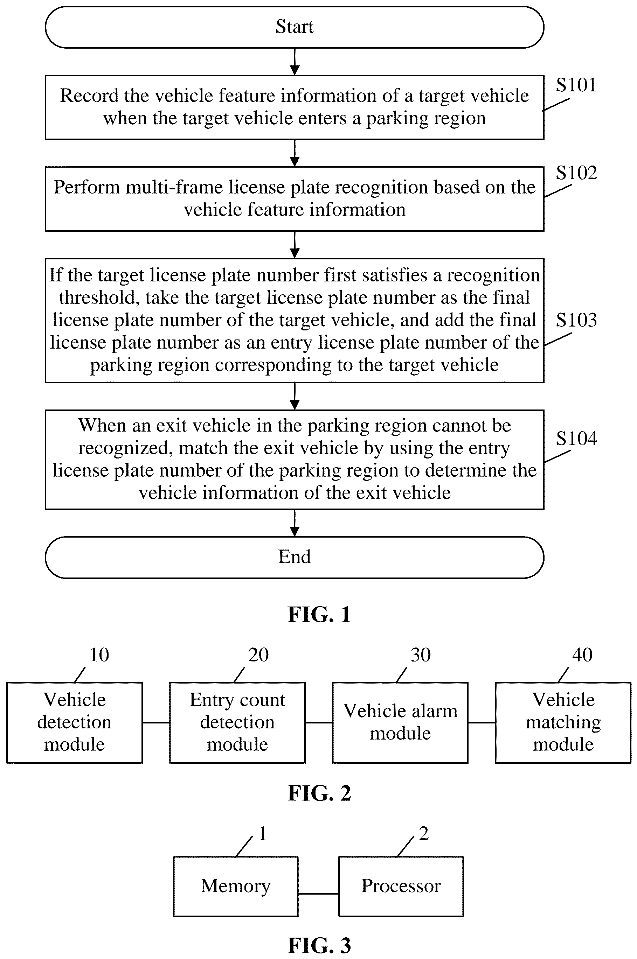

Referring to FIG. 1, FIG. 1 is a flowchart of a vehicle tracking method according to an embodiment of this application. The vehicle tracking method includes the following.

In S101, the vehicle feature information of a target vehicle is recorded when the target vehicle enters.

In S102, multi-frame license plate recognition is performed based on the vehicle feature information.

In S103, if the target license plate number first satisfies a recognition threshold, the target license plate number is taken as the final license plate number of the target vehicle, and the final license plate number is added as an entry license plate number of the parking region corresponding to the target vehicle.

In S104, when an exit vehicle in the parking region cannot be recognized, the exit vehicle is matched by using the entry license plate number of the parking region to determine the vehicle information of the exit vehicle.

Step S101 aims to record the vehicle feature information when the target vehicle enters. The target vehicle may be any vehicle. In this embodiment, the target vehicle refers to a target vehicle to be tracked and monitored. The vehicle feature information is not limited here. Usually, the license plate may be used as the vehicle feature information because of its unique recognition. The vehicle feature information may include other information including vehicle appearance and vehicle type.

No limitation is made here on how to detect vehicle entry. In an embodiment, if the target vehicle is detected in the video stream information corresponding to an entrance, it may be regarded as the entry of the target vehicle. In another embodiment, the vehicle front direction of a vehicle may be detected so as to judge whether the target vehicle is in the entry state or the exit state. A vehicle target may be detected. The vehicle front may be detected when the vehicle enters or exits from the parking region in a forward direction. The vehicle rear may be detected when the vehicle enters or exits from the parking region in a reverse direction.

The entry and exit state of the vehicle may be judged according to the relationship between the vehicle front or the vehicle rear and the monitored parking region. For example, when more than 3/4 of the vehicle front or the vehicle rear intersects with the parking region, it is judged that the vehicle is in the parking region. When less than 1/2 of the vehicle front or the vehicle rear intersects with the parking region, it is judged that the vehicle is not in the parking region. The vehicle states (the vehicle in the parking region, the vehicle not in the parking region, or the intersection ratio of the vehicle to the parking region) at adjacent moments are determined and compared. The entry and exit state of the vehicle is judged according to a comparison result.

The parking region in this step may be a parking region within a monitoring range. That is, the monitoring range of each camera is a corresponding parking region. It may also be understood as that a parking space included in a monitoring range is used as the parking region. The parking region may usually correspond to one monitored parking space. At any moment, only one entry or exit event may be generated in the same parking region.

The vehicle state is determined according to the intersection relationship between a vehicle detection box and the parking region, and vehicle entry or exit is judged according to the change between the previous state and current state of the vehicle. That is, when the previous state of the vehicle is that the vehicle is not in the parking region and the current state of the vehicle is that the vehicle is in the parking region, the vehicle is regarded to enter the parking region. After it is judged that the vehicle enters the parking region, the current vehicle position is regarded as the previous state position of the vehicle, which is convenient for the judgment of subsequent vehicle exit. That is, when the previous state of the vehicle is that the vehicle is in the parking region and the current state of the vehicle is that the vehicle is not in the parking region, the vehicle is regarded to exit from the parking region. Similarly, after it is judged that the vehicle exits from the parking region, the current vehicle position is regarded as the previous state position of the vehicle, which is convenient for the judgment of subsequent vehicle entry. Instead of updating the previous state position of the vehicle every frame, the previous state position of the vehicle is updated only after it is determined that the vehicle enters or exits from the parking region.

When the vehicle feature information of the target vehicle is recorded, the target vehicle may be continuously recorded, and the entry information of the target vehicle may also be uploaded.

Then the vehicle feature information of the entry vehicle is detected and recognized. The multi-frame license plate recognition needs to be performed according to the vehicle feature information. In order to guarantee the accuracy of the license plate number of the target vehicle, the multi-frame license plate recognition may be performed on the entry target vehicle. Moreover, an optimal result may be taken as the final license plate number of the target vehicle from results of the multi-frame license plate recognition. By way of example, the license plate is taken as the vehicle feature information. When the counts of the same recognition of any entry license plate number reach the threshold first, the license plate number is selected as the target license plate number, that is, as the alarm license plate number of the entry vehicle. Moreover, the target license plate number is recorded as the entry license plate number graphPlateNo [graphAlarmIn] in the parking region. In this embodiment, only one vehicle enters or exits from a parking region at a time. Moreover, the entry and exit at a time form the closed-loop state of the same vehicle. For the exit vehicle, the judged exit vehicle is strongly associated with the license plate in the parking region. The entry license plate number recorded in the same parking region ID is assigned to the alarm license plate number of the exit vehicle this time. Later, the license plate number entering the parking region may be cleared, which is convenient for recording and matching the next target license plate number. When the parking space is monitored, it is easy to capture a temporary passing vehicle in a monitoring scene. In order to prevent the temporary passing vehicle from being mistaken for the exit vehicle and thus leading to an erroneous association with the entry license plate number, on the basis of the preceding embodiment, a character matching strategy may be added to avoid the abnormal situation where the entry and exit of different vehicles are associated with each other. That is, the license plate number of the exit vehicle is recognized only once. If the length of consecutive similar characters between the license plate number of the exit vehicle and the entry license plate number of the parking region is less than a preset character length threshold, for example, if the length of consecutive similar characters is less than 3, it is determined that the exit vehicle and the target vehicle are different vehicles, and no association operation in the parking region is performed on the exit vehicle. If the length of consecutive similar characters between the license plate number of the exit vehicle and the entry license plate number of the parking region is greater than or equal to the preset character length threshold, it may be determined that the exit vehicle and the target vehicle are the same vehicle. Then the entry license plate number recorded in the same parking region ID is assigned to the alarm license plate number of the current exit vehicle.

In this embodiment of the present application, when vehicle tracking is performed, for a scene where a vehicle behavior is uncontrollable, where scene survey is uncontrollable, for example, where the vehicle speed is excessively high or the vehicle tilts to affect the normal recognition of the vehicle, or where the camera is excessively low to lead to a relatively large detection parking region, the state feature of the parking region and the license plate information of the vehicle entering the parking region may be used to match the vehicle exiting from the parking region. Accordingly, the association mechanism between the vehicle and the parking region is established, improving the robustness of vehicle detection, reducing the limitation of scenes and visual conditions, making the recognition of vehicle entry and exit be less disturbed by environment or human beings, guaranteeing the integrity of the alarm evidence chain in the entry and exit process of the vehicle in the parking region, and guaranteeing the reliability of a license plate recognition result.

On the basis of the preceding embodiment, after the vehicle feature information of the target vehicle is recorded, the entry and exit information of the target vehicle may be continuously recorded and uploaded. The vehicle ID of the target vehicle may be stored, and the corresponding entry and exit information may be stored according to the vehicle ID.

For the entry information, after the entry vehicle is determined, the entry information of the vehicle ID may be continuously recorded. If the vehicle is determined to be in the parking region thereafter, the entry state information and detection box information of the vehicle ID may be continuously recorded and uploaded, facilitating the subsequent selection of the license plate number of the vehicle and avoiding the risk of a missing report caused by that the target license plate number is not detected while the entry information is uploaded only once.

For the exit information, after the exit vehicle is determined, the exit information of the vehicle ID may be continuously recorded, facilitating the character matching operation in the subsequent association with the entry license plate number and avoiding an impact on character matching caused by a failure to detect the exit license plate in a single detection. Then it is judged that the vehicle is not in the parking region at all. The exit state information and detection box information of the vehicle ID are continuously recorded and uploaded, which can also avoid a missing report. The license plate number does not need to be selected according to the exit information. The exit vehicle is directly associated with the entry license plate number. However, the preceding character matching operation needs to be performed to determine whether the exit vehicle and the target vehicle are the same vehicle. If the exit information is uploaded only once, a risk may exist that the license plate cannot be detected in this frame and thus character matching cannot be used. Therefore, the exit information is continuously reported.

In order to avoid multiple alarms of the vehicle, not only the vehicle ID may be used as an alarm reference in the entry and exit process of the vehicle, but also the parking region ID of the parking region where the vehicle is located may also be combined to solve the problem of multiple alarms. This may include the steps below.

When a vehicle enters the parking region, an exit report detection switch of the parking region is turned on; when the exit report detection switch is not turned on, an alarm for the exit vehicle in the parking region is stopped; similarly, after the vehicle exits from the parking region, an entry report detection switch of the parking region may be turned on; when the entry report detection switch is not turned on, an alarm for the entry vehicle in the parking region is stopped.

Independent detection switches are set for the entry process and the exit process respectively. An alarm can be issued for the target vehicle only when a detection switch is turned on, implementing alarm filtering.

On this basis, the entry report detection switch and the exit report detection switch may be controlled to report the final entry and exit vehicles. This includes the steps below.

It is judged whether the entry report detection switch of the parking region is turned on; if so, an alarm is issued for the entry vehicle, relevant vehicle feature information and vehicle capture information are uploaded, and the entry report detection switch is turned off; it is judged whether the exit report detection switch of the parking region is turned on; if so, an alarm is issued for the exit vehicle, relevant vehicle feature information and vehicle capture information are uploaded, and the exit report detection switch is turned off.

An alarm is issued for the target vehicle after alarm filtering in the preceding process, and judgment is performed according to the preceding process. If the entry report detection switch is in the open state, an alarm is issued, including the entry vehicle target alarm entering the "IN" state and uploading an event large picture, a vehicle license plate capture picture and vehicle license plate information. Similarly, the preceding operation may also be performed for the exit process.

On the basis of the preceding embodiment, a situation may exist that the exit vehicle in the parking region cannot be recognized. The reason for this situation may be that a vehicle exit behavior cannot be effectively detected due to the reason of engineering survey, for example, at night or in extreme weather environment. The reason may be that the vehicle exceeds the monitoring screen when the vehicle exits, making the vehicle front or the vehicle rear unable to be detected. The reason may be that the vehicle ID may be changed in a night scene and a partial block of the vehicle. The reason may also be that the exit vehicle is not detected due to the exposure of the license plate or excessively high speed. In the case where the vehicle cannot be effectively detected and tracked, an exit event may be added based on an empty exit strategy first. After the exit event is added, the exit vehicle corresponding to the exit event may be matched with the license plate number of the entry vehicle in the parking region to supplement the license plate number of the unrecognized exit vehicle. The empty exit strategy may be as below to supplement the unreported exit vehicle.

In the first step, if an entry alarm target is detected, a vehicle target in the parking region is detected. The vehicle target includes a whole-vehicle detection box, a vehicle front or vehicle rear detection box, and a license plate detection box. In the second step, if none of the whole-vehicle detection box, the vehicle front or vehicle rear detection box, and the license plate detection box is located in the parking region, it is determined that the parking region is in the empty state and, the empty count is incremented by one. In the third step, when at least one of the whole-vehicle detection box, the vehicle front or vehicle rear detection box, or the license plate detection box is located in the parking region, the empty count is reset to zero. In the fourth step, if the empty count satisfies a set empty threshold, an unreported exit event is supplemented, and a vehicle detection box is virtually generated. The exit event corresponds to the license plate number of the exit vehicle being the last entry license plate number in the parking region.

That is, for the detected entry vehicle, empty detection is performed according to the parking region where the detected entry vehicle is located. In order to prevent adjacent parking regions from being excessively close to result in partial intersection between vehicles in other parking regions and affect the empty judgment of the parking region, a threshold intersection condition may be set when the vehicle target in the parking region is detected. Because the vehicle target cannot be recognized when empty supplement is performed, the unrecognized exit vehicle is directly associated with the entry license plate number without character matching.

The entry license plate number recorded for the parking region may be cleared after an alarm for normal exit is issued or after the unreported exit event is supplemented, that is, after the vehicle exit behavior is detected or after no vehicle exit behavior is detected. Moreover, it is regarded as the vehicle exiting from the parking region. That is, the entry report detection switch of the parking region may be turned on in this case.

On the basis of the preceding embodiment, that the vehicle target in the parking region is detected includes the following.

If the ratio of the area of an intersection region between the whole-vehicle detection box and the maximum inscribed rectangle of the parking region to the area of the whole-vehicle detection box is greater than a first threshold, it is determined that the whole vehicle is located in the parking region (alternatively, the whole-vehicle detection box is located in the parking region). If the ratio of the area of an intersection region between the vehicle front or vehicle rear detection box and the maximum inscribed rectangle of the parking region to the area of the vehicle front or vehicle rear detection box is greater than a second threshold, it is determined that the vehicle front or the vehicle rear is located in the parking region (alternatively, the vehicle front or vehicle rear detection box is located in the parking region). If an intersection region exists between the license plate detection box and the parking region, it is determined that the license plate is located in the parking region (alternatively, the license plate detection box is located in the parking region).

The judgment standard of the whole vehicle, the vehicle front, and the vehicle rear is to compare the intersection parking region between a target detection box and the maximum inscribed rectangle of the parking region with the target detection box. This is because the parking region is an irregular quadrilateral. When calculating the intersection with the target detection box, the program logic typically automatically uses the circumscribed rectangle of the quadrilateral to compute the intersection with the target detection box. Additionally, due to camera perspective and the dimensions of passing vehicles, in some cases, some passing vehicles may intersect with the circumscribed rectangle of the parking region. To avoid the effect of a passing vehicle, the maximum inscribed rectangle of the parking region is used in combination with the limitation of an intersection threshold, thereby recognizing whether the vehicle target exists in the parking region and preventing the passing vehicle from affecting judgment on the state of the parking region. The preceding standard is not used for the license plate because a license plate target is small. A license plate intersection threshold is set relatively high, making the passing vehicle fail to meet the judgment standard corresponding to the intersection threshold. Therefore, the circumscribed rectangle of the default parking region may be used for calculation regarding the license plate detection box.

The first threshold value and the second threshold value are not limited here and may be set by those skilled in the art. The first threshold value and the second threshold value may be the same or may be set to different values. By way of example, the first threshold value and the second threshold value are each 0.5. A feasible threshold intersection condition may be as below.

A whole-vehicle threshold intersection condition is defined as follows. An intersection region $S_{mc}$ is determined between a whole-vehicle detection box $S_m$ and a maximum inscribed rectangle $A_{Internal}$ of a parking region. When a ratio of an area of the intersection region $S_{mc}$ to an area of the whole-vehicle detection box $S_m$ is greater than 0.5, it is determined that the whole vehicle is located in the parking region (the whole-vehicle detection box $S_m$ is located in the parking region). When the ratio of the area of the intersection region $S_{mc}$ to the area of the whole-vehicle detection box $S_m$ is not greater than 0.5, it is determined that the whole vehicle is not located in the parking region (the whole-vehicle detection box $S_m$ is not located in the parking region). The mathematical condition is as below.

$$(S_m \cap A_{Internal}) / S_m > 0.5.$$

A vehicle front or vehicle rear threshold intersection condition is defined as follows. An intersection region $S_{vc}$ is determined between a vehicle front or vehicle rear detection box $S_v$ and a maximum inscribed rectangle $A_{Internal}$ of a parking region. When a ratio of an area of the intersection region $S_{vc}$ to an area of the vehicle front or vehicle rear detection box $S_v$ is greater than 0.5, it is determined that the vehicle front or the vehicle rear is located in the parking region (the vehicle front or vehicle rear detection box $S_v$ is located in the parking region). When the ratio of the area of the intersection region $S_{vc}$ to the area of the vehicle front or vehicle rear detection box $S_v$ is not greater than 0.5, it is determined that the vehicle front or the vehicle rear is not located in the parking region (the vehicle front or vehicle rear detection box $S_v$ is not located in the parking region). The mathematical condition is as below.

$$(S_v \cap A_{Internal}) / S_v > 0.5.$$

A license plate threshold intersection condition is defined as follows. An intersection region $S_{pc}$ is determined between a license plate detection box $S_p$ and a parking region A. When a ratio of an area of the intersection region $S_{pc}$ to an area of the license plate detection box $S_p$ is greater than 0.5, it is determined that the license plate is located in the parking region (the license plate detection box $S_p$ is located in the parking region). When the ratio of the area of the intersection region $S_{pc}$ to the area of the license plate detection box $S_p$ is not greater than 0.5, it is determined that the license plate is not located in the parking region (the license plate detection box $S_p$ is not located in the parking region).

$$(S_p \cap A) / S_p > 0.5.$$

Additionally, after an alarm for normal exit is issued or after the unreported exit event is supplemented, the entry license plate number recorded for the parking region may be cleared timely, facilitating the record of the license plate of the next entry vehicle target.

A vehicle tracking system according to an embodiment of the present application is described hereinafter. The vehicle tracking system described below and the preceding vehicle tracking method may refer to each other.

Referring to FIG. 2, FIG. 2 is a structural diagram of a vehicle tracking system according to an embodiment of the present application. The present application further provides a vehicle tracking system. The vehicle tracking system includes a vehicle detection module 10, an entry count detection module 20, a vehicle alarm module 30, and a vehicle matching module 40.

The vehicle detection module 10 is configured to record the vehicle feature information of a target vehicle when the target vehicle enters. The entry count detection module 20 is configured to perform multi-frame license plate recognition based on the vehicle feature information. The vehicle alarm module 30 is configured to, when the target license plate number first satisfies a recognition threshold, take the target license plate number as the final license plate number of the target vehicle and add the final license plate number as an entry license plate number of the parking region corresponding to the target vehicle. The vehicle matching module 40 is configured to, when an exit vehicle in the parking region cannot be recognized, match the exit vehicle by using the entry license plate number of the parking region to determine the vehicle information of the exit vehicle.

On the basis of the preceding embodiment, the vehicle matching module 40 includes a matching unit.

The matching unit is configured to perform license plate recognition once on the exit vehicle in the parking region by using character matching in the case where the exit vehicle exists in the parking region, determine that the exit vehicle and the target vehicle are different vehicles if the length of consecutive similar characters between the license plate number of the exit vehicle and the target license plate number of the target vehicle entering the parking region is less than a preset character length threshold, and determine that the exit vehicle and the target vehicle are the same vehicle if the length of consecutive similar characters between the license plate number of the exit vehicle and the target license plate number of the target vehicle entering the parking region is greater than or equal to the preset character length threshold.

On the basis of the preceding embodiment, the vehicle tracking system further includes an exit detection switch setting module and an entry detection switch setting module.

The exit detection switch setting module is configured to turn on an exit report detection switch of the parking region when a vehicle enters the parking region and stop an alarm for the exit vehicle in the parking region when the exit report detection switch is not turned on. The entry detection switch setting module is configured to turn on an entry report detection switch of the parking region after the vehicle exits from the parking region and stop an alarm for an entry vehicle in the parking region when the entry report detection switch is not turned on.

On the basis of the preceding embodiment, the vehicle tracking system further includes a first alarm module and a second alarm module.

The first alarm module is configured to judge whether the entry report detection switch of the parking region is turned on and, when the entry report detection switch of the parking region is turned on, issue an alarm for the entry vehicle, upload relevant vehicle feature information and vehicle capture information, and turn off the entry report detection switch. The second alarm module is configured to judge whether the exit report detection switch of the parking region is turned on and, when the exit report detection switch of the parking region is turned on, issue an alarm for the exit vehicle, upload relevant vehicle feature information and vehicle capture information, and turn off the exit report detection switch.

On the basis of the preceding embodiment, the vehicle tracking system further includes an empty detection module.

The empty detection module is configured to detect a vehicle target in the parking region. The vehicle target includes a whole-vehicle detection box, a vehicle front or vehicle rear detection box, and a license plate detection box. The empty detection module is further configured to determine that the parking region is in the empty state and increment the empty count by one if none of the whole-vehicle detection box, the vehicle front or vehicle rear detection box, and the license plate detection box is located in the parking region, reset the empty count to zero when at least one of the whole-vehicle detection box, the vehicle front or vehicle rear detection box, or the license plate detection box is located in the parking region, and supplement an unreported exit event and virtually generate a vehicle detection box if the empty count satisfies a set empty threshold. The exit event corresponds to a license plate number of the exit vehicle being the last entry license plate number in the parking region.

On the basis of the preceding embodiment, the vehicle tracking system further includes an information clearing module.

The information clearing module is configured to clear the entry license plate number recorded for the parking region after an alarm for normal exit is issued or the unreported exit event is supplemented.

On the basis of the preceding embodiment, the empty detection module includes a whole-vehicle threshold detection module.

The whole-vehicle threshold detection module is configured to determine that the whole-vehicle detection box is located in the parking region if the ratio of the area of an intersection region between the whole-vehicle detection box and the maximum inscribed rectangle of the parking region to the area of the whole-vehicle detection box is greater than a first threshold, determine that the vehicle front or vehicle rear detection box is located in the parking region if the ratio of the area of an intersection region between the vehicle front or vehicle rear detection box and the maximum inscribed rectangle of the parking region to the area of the vehicle front or vehicle rear detection box is greater than a second threshold, and determine that the license plate detection box is located in the parking region if an intersection region exists between the license plate detection box and the parking region.

The present application further provides a computer-readable storage medium for storing computer programs. When the computer programs are executed by a processor, steps according to the preceding embodiments may be performed. The storage medium may include a USB flash disk, a mobile hard disk, a read-only memory (ROM), a random access memory (RAM), a non-transitory storage medium, a magnetic disk, an optical disk, or another medium capable of storing program codes.

The present application also provides a server. As shown in FIG. 3, the server may include a memory 1 and a processor 2. The memory 1 stores computer programs. The processor 2, when calling the computer programs in the memory, may perform steps according to the preceding embodiments. The server may also include multiple components such as a network interface and a power supply.

The vehicle tracking system, storage medium, and electronic device provided in the present application can improve the precision of vehicle tracking and detection and have the same effects as the preceding vehicle tracking method. Multiple embodiments in this specification are described in a progressive manner. Each embodiment focuses on differences from other embodiments. The same or similar parts in multiple embodiments can be referred to by each other. As for the system provided in embodiments, since the system corresponds to the method provided in embodiments, the description is relatively simple. For related information, reference may be made to the description of the method.

Herein principles and embodiments of the present application are described with reference to individual examples. The description of the preceding embodiments is merely used to help understand the method in the present application.

As used herein, relationship terms such as "first" and "second" are used merely to distinguish one entity or operation from another without necessarily requiring or implying any such actual relationship or order between these entities or operations. Moreover, the term "comprising", "including" or any other variant thereof is intended to encompass a non-exclusive inclusion so that a process, method, article or device that includes a series of elements not only includes the elements but also includes other elements that are not expressly listed or are inherent to such process, method, article or device. In the absence of more restrictions, the elements defined by the statement "including a ..." do not exclude the presence of additional identical elements in the process, method, article or device that includes the elements.

**Claims**

1. A vehicle tracking method, comprising:

   recording vehicle feature information of a target vehicle in a case where the target vehicle enters a parking region;
   performing multi-frame license plate recognition based on the vehicle feature information;
   in a case where a target license plate number first satisfies a recognition threshold, taking the target license plate number as a final license plate number of the target vehicle, and adding the final license plate number as an entry license plate number of the parking region corresponding to the target vehicle; and
   in a case where an exit vehicle in the parking region cannot be recognized, matching the exit vehicle by using the entry license plate number of the parking region to determine vehicle information of the exit vehicle.

2. The vehicle tracking method according to claim 1, further comprising:

   in a case where the exit vehicle exists in the parking region, performing a license plate recognition on the exit vehicle in the parking region by using character matching;
   in a case where a length of consecutive similar characters between a license plate number of the exit vehicle and the target license plate number of the target vehicle entering the parking region is less than a preset character length threshold, determining that the exit vehicle and the target vehicle are different vehicles; and
   in a case where the length of consecutive similar characters between the license plate number of the exit vehicle and the target license plate number of the target vehicle entering the parking region is greater than or equal to the preset character length threshold, determining that the exit vehicle and the target vehicle are a same vehicle.

3. The vehicle tracking method according to claim 2, before performing the license plate recognition once on the exit vehicle in the parking region by using the character matching, further comprising:

   in a case where a vehicle enters the parking region, turning on an exit report detection switch of the parking region;
   in a case where the exit report detection switch is not turned on, stopping an alarm for the exit vehicle in the parking region;
   after the vehicle exits from the parking region, turning on an entry report detection switch of the parking region; and
   in a case where the entry report detection switch is not turned on, stopping an alarm for an entry vehicle in the parking region.

4. The vehicle tracking method according to claim 3, further comprising:

   judging whether the entry report detection switch of the parking region is turned on; and
   in response to the entry report detection switch of the parking region being turned on, issuing an alarm for the entry vehicle, uploading vehicle feature information and vehicle capture information, and turning off the entry report detection switch; or,
   judging whether the exit report detection switch of the parking region is turned on; and in response to the exit report detection switch of the parking region being turned on, issuing an alarm for the exit vehicle, uploading vehicle feature information and vehicle capture information, and turning off the exit report detection switch.

5. The vehicle tracking method according to claim 1, wherein, in the case where no exit vehicle action in the parking region is detected due to the exit vehicle in the parking region unable to be recognized, before matching the exit vehicle by using the entry license plate number of the parking region, the method further comprises:

detecting a vehicle target in the parking region, wherein the vehicle target comprises a whole-vehicle detection box, a vehicle front or vehicle rear detection box, and a license plate detection box;

in a case where none of the whole-vehicle detection box, the vehicle front or vehicle rear detection box, and the license plate detection box is located in the parking region, determining that the parking region is in an empty state and, incrementing an empty count by one;

in a case where at least one of the whole-vehicle detection box, the vehicle front or vehicle rear detection box, or the license plate detection box is located in the parking region, resetting the empty count to zero; and

in a case where the empty count satisfies a set empty threshold, supplementing an unreported exit event, and virtually generating a vehicle detection box, wherein the exit event corresponds to a license plate number of the exit vehicle being a last entry license plate number in the parking region.

6. The vehicle tracking method according to claim 5, further comprising:
after issuing an alarm for normal exit or supplementing the unreported exit event, clearing the entry license plate number recorded for the parking region.

7. The vehicle tracking method according to claim 5, wherein detecting the vehicle target in the parking region comprises:

in a case where a ratio of an area of an intersection region between the whole-vehicle detection box and a maximum inscribed rectangle of the parking region to an area of the whole-vehicle detection box is greater than a first threshold, determining that the whole-vehicle detection box is located in the parking region;

in a case where a ratio of an area of an intersection region between the vehicle front or vehicle rear detection box and the maximum inscribed rectangle of the parking region to an area of the vehicle front or vehicle rear detection box is greater than a second threshold, determining that the vehicle front or vehicle rear detection box is located in the parking region; and

in a case where an intersection region exists between the license plate detection box and the parking region, determining that the license plate detection box is located in the parking region.

8. A vehicle tracking system, comprising:

a vehicle detection module configured to record vehicle feature information of a target vehicle in a case where the target vehicle enters a parking region;

an entry count detection module configured to perform multi-frame license plate recognition based on the vehicle feature information;

a vehicle alarm module configured to, in a case where a target license plate number first satisfies a recognition threshold, take the target license plate number as a final license plate number of the target vehicle and add the final license plate number as an entry license plate number of the parking region corresponding to the target vehicle; and

a vehicle matching module configured to, in a case where an exit vehicle in the parking region cannot be recognized, match the exit vehicle by using the entry license plate number of the parking region to determine vehicle information of the exit vehicle.

9. A computer-readable storage medium for storing computer programs, wherein when the computer programs are executed by a processor, the vehicle tracking method according to any one of claims 1 to 7 is performed.

10. A server, comprising a processor and a memory, wherein the memory stores computer programs; and the processor, when calling the computer programs in the memory, performs the vehicle tracking method according to any one of claims 1 to 7.

Start

Record the vehicle feature information of a target vehicle when the target vehicle enters a parking region — S101

Perform multi-frame license plate recognition based on the vehicle feature information — S102

If the target license plate number first satisfies a recognition threshold, take the target license plate number as the final license plate number of the target vehicle, and add the final license plate number as an entry license plate number of the parking region corresponding to the target vehicle — S103

When an exit vehicle in the parking region cannot be recognized, match the exit vehicle by using the entry license plate number of the parking region to determine the vehicle information of the exit vehicle — S104

End

**FIG. 1**

| 10 | 20 | 30 | 40 |
|---|---|---|---|
| Vehicle detection module | Entry count detection module | Vehicle alarm module | Vehicle matching module |

**FIG. 2**

| 1 | 2 |
|---|---|
| Memory | Processor |

**FIG. 3**

## INTERNATIONAL SEARCH REPORT

| International application No. |
| --- |
| **PCT/CN2024/091827** |

| A. | CLASSIFICATION OF SUBJECT MATTER |
| --- | --- |

G06V20/62(2022.01)i; G06V10/75(2022.01)i; G06V10/25(2022.01)i; G08G1/017(2006.01)i

According to International Patent Classification (IPC) or to both national classification and IPC

| B. | FIELDS SEARCHED |
| --- | --- |

Minimum documentation searched (classification system followed by classification symbols)

IPC: G06V, G08G

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 车牌, 车位, 识别, 框, 车头, 车尾, 停车, 检测, license plate, park, space, recognition, detection, box, front, head, back

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| PX | CN 116824569 A (JINAN BOGUAN INTELLIGENT TECHNOLOGY CO., LTD.) 29 September 2023 (2023-09-29)<br>description, paragraphs [0047]-[0116] | 1-10 |
| X | CN 111898485 A (ZHEJIANG DAHUA TECHNOLOGY CO., LTD.) 06 November 2020 (2020-11-06)<br>description, paragraphs [0067]-[0172] | 1-10 |
| A | CN 112382101 A (BEIJING LOTTOP TECHNOLOGY CO., LTD.) 19 February 2021 (2021-02-19)<br>entire document | 1-10 |
| A | WO 2014072971 A1 (GIVON, A. et al.) 15 May 2014 (2014-05-15)<br>entire document | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 July 2024** | **23 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/091827**

| Patent document cited in search report | | | Publication date (day/month/year) | Patent family member(s) | Publication date (day/month/year) |
|---|---|---|---|---|---|
| CN | 116824569 | A | 29 September 2023 | None | |
| CN | 111898485 | A | 06 November 2020 | None | |
| CN | 112382101 | A | 19 February 2021 | None | |
| WO | 2014072971 | A1 | 15 May 2014 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310812852X